# EUROPEAN PATENT SPECIFICATION

(11) **EP 1 312 645 B1**
(45) Date of publication and mention of the grant of the patent: **03.01.2007**
(21) Application number: 02025574.1
(22) Date of filing: 15.11.2002
(51) Int. Cl.: C08L 59/00, C08L 59/04

(54) **Polyoxymethylene resin composition and molded article thereof**
Polyoxymethylenharz-Zusammensetzung und Formteile daraus
Composition de résine de polyoxymethylene et les articles moulés

(30) Priority: 16.11.2001 JP 2001352236; 26.04.2002 JP 2002125999
(43) Date of publication of application: 21.05.2003
(73) Proprietor: MITSUBISHI GAS CHEMICAL COMPANY, INC., Tokyo 100-0005 (JP)
(72) Inventor: Furukawa, Masanori, Mitsubishi Gas Chem. Co., Inc., Yokkaichi-shi, Mie 510-0886 (JP); Nakaya, Daigo, Mitsubishi Gas Chemical Co., Inc., Yokkaichi-shi, Mie 510-0886 (JP); Hayashi, Katsushige, Mitsubishi Gas Chem. Co. Inc., Yokkaichi-shi, Mie 510-0886 (JP); Mimura, Hiroshi, Mitsubishi Gas Chemical Co., Inc., Yokkaichi-shi, Mie 510-0886 (JP); Sunaga, Daisuke, Mitsubishi Gas Chemical Co., Inc., Yokkaichi-shi, Mie 510-0886 (JP)
(74) Representative: Albrecht, Thomas

(56) References cited:
- EP-A- 1 057 868
- US-A- 4 772 662
- US-B1- 6 191 222
- PATENT ABSTRACTS OF JAPAN vol. 1997, no. 08, 29 August 1997 (1997-08-29) & JP 09 111098 A (ASAHI CHEM IND CO LTD), 28 April 1997 (1997-04-28)

## Description

### Detailed Description of the Invention

### Field of the Invention

The present invention relates to a polyoxymethylene resin composition that is excellent in tenacity and excellent against bending fatigue while retaining mechanical strength a polyoxymethylene resin inherently has, and a molded article thereof.

### Prior Art of the Invention

A polyoxymethylene resin has excellent properties with respect to mechanical properties, thermal properties, electric properties, slidability, moldability, etc., and is widely used as a structural material, a mechanical part, etc., in electric machines and equipment, automobile parts and precision machine parts.

Concerning a thermoplastic resin, generally, other resin having properties that a thermoplastic resin does not have is incorporated into it for overcoming defects of the thermoplastic resin, and such an object is achieved in many cases.

However, differing from any general thermoplastic resin, a polyoxymethylene resin is poor particularly in compatibility and dispersibility with other thermoplastic resin when it is incorporated therein, and adhesion in an interface between two phases is also insufficient, so that a phase separation is caused to occur in the interface. When such a mixture is molded, a surface layer of a molded article is peeled in some cases, and it is very difficult to modify a polyoxymethylene resin by incorporating other resin as described above.

When applied to the field of parts that are required to have a light weight and high tenacity such as an automobile part and a clothing part, a polyoxymethylene resin has disadvantages that it is fragile and poor in flexibility and impairs functions of such parts, and it is strongly demanded to improve the polyoxymethylene resin in such functions.

Further, when used in the field of parts having a bending portion, such as a hinge part, a polyoxymethylene resin has insufficient durability, and it is desired to improve the polyoxymethylene resin in such a point.

There have been some proposals made for improving a polyoxymethylene resin in bending properties in order to improve the durability of a hinge part made thereof.

For example, there have been proposed a resin composition prepared by incorporating an oxyalkylene polymer such as polyethylene oxide into a polyoxymethylene resin (JP-A-8-183115 and JP-A-8-259779) and a resin composition prepared by incorporating a specific core-shell polymer into a polyoxymethylene resin (JP-A-8-325431, JP-A-9-111097 and JP-A-9-176444). These resin compositions are obtained by incorporating a specific polymer to a polyoxymethylene resin and are improved in bending properties to some extent. However, these resin compositions have failed to accomplish satisfactory durability.

It has been also proposed to modify the polymer structure of a polyoxymethylene resin for improving the polyoxymethylene resin in bending properties. For example, JP-A-9-111098 discloses a polyoxymethylene copolymer that contains 0.07 to 0.5 mol% of a specific oxyalkylene unit from a comonomer and have a specific terminal group. Further, JP-A-2001-64479 discloses a resin composition containing a specific polyoxymethylene copolymer and a modified α-olefin polymer modified with an unsaturated di-carboxylic acid. These proposals require the use of specific polyoxymethylene copolymer, and the bending properties of molded articles therefrom are not yet sufficient.

EP 1 057 868 A2 discloses a thermoplastic molding composition comprising the following components (A), (B), (C) and (D):
(A) 30 to 99.8 wt% of a polyoxymethylene homo- or co-polymer,
(B) 0.1 to 10 wt% of a polyalkylene glycol,
(C) 0.1 to 10 wt% of zinc oxide, and
(D) 0 to 50 wt% of a filler.

A copolymer containing 98.6 wt% of trioxan and 1.4 wt% of dioxolane is used as (A) the polyoxymethylene copolymer in Examples 1 to 4. Table 1 of this document shows that the break change ratio decreases according to a combination of the components (A), (B) and (C) (Examples 1 and 2).

It is an object of the present invention to provide a polyoxymethylene resin composition that has high tenacity expressed by a large measurement value of a stress at tensile rupture measured according to ISO 527-1 and 527-2 standards and has remarkably excellent properties against bending fatigue (to be referred to as "folding durability" hereinafter) and molded articles thereof.

### Means to Solve the Problems

For achieving the above object, the present inventors have made diligent studies and have found that the object is achieved by a resin composition prepared by incorporating a predetermined amount of a polyalkylene glycol into a polyoxymethylene copolymer containing an oxymethylene unit as a main structural unit and a predetermined amount of an oxyalkylene unit having at least 2 carbon atoms as a unit from a comonomer.

That is, according to the present invention, there is provided a polyoxymethylene resin composition consisting essentially of
(A) 100 parts by weight of a polyoxymethylene copolymer containing an oxymethylene unit as a main recurring unit and 1.8 to 10 mol, per 100 mol of the oxymethylene unit, of an oxyalkylene unit having at least 2 carbon atoms as a unit from a comonomer (Component A), with the proviso that 3.6 mol and 7.7 mol, per 100 mol of the oxymethylene unit, of the oxyalkylene unit are excluded, and
(B) 1 to 50 parts by weight of a polyalkylene glycol (Component B).

According to the present invention, there is also provided a molded article and a molded hinge part article of claims 10 and 11, respectively.

The resin composition of the present invention will be explained further in detail hereinafter.

In the resin composition of the present invention, the polyoxymethylene copolymer as Component A contains an oxymethylene unit as a main recurring unit and a predetermined amount ratio of an oxyalkylene unit having at least 2 carbon atoms as a unit from a comonomer. Component A can be prepared by copolymerizing a comonomer that gives an oxyalkylene unit as a copolymerization unit when a polyoxymethylene is produced by polymerization.

The polymerization method for the polyoxymethylene copolymer (Component A) includes a bulk polymerization method and a solution polymerization method. The polymerization method is preferably a bulk polymerization method that substantially does not use a solvent or a quasi-bulk polymerization method using a solvent in an amount of 20 % by weight or less based on the weight of monomers. In these bulk polymerization methods, monomers in a molten state are polymerized and a solid polymer in the form of a bulk or powder is obtained as the polymerization proceeds.

Trioxane that is a cyclic trimer of formaldehyde is preferred as a main source monomer. The comonomer that gives an alkylene unit having at least 2 carbon atoms is preferably a comonomer that gives an alkylene unit having 2 to 6 carbon atoms, particularly preferably a comonomer that gives an ethylene unit having 2 carbon atoms. Such a comonomer is not critical so long as it is a cyclic ether, a glycidyl ether compound or cyclic formal. The comonomer includes ethylene oxide, propylene oxide, butylenes oxide, styrene oxide, methyl glycidyl ether, ethyl glycidyl ether, phenyl glycidyl ether, 1,3-dioxolane, propylene glycol formal, diethylene glycol formal, triethylene glycol formal, 1,4-butanediol formal, 1,5-pentanediol formal and 1,6-hexanediol formal. These comonomers may be used alone or in combination of two or more. The comonomer is preferably selected from ethylene oxide, 1,3-dioxolane, diethylene glycol formal or 1,4-butanediol formal. In view of copolymerizability with the trioxane, 1,3-dioxolane is particularly preferred. The polyoxymethylene resin is obtained by copolymerizing the above monomer that gives an oxyalkylene unit having at least 2 carbon atoms and trioxane that is a cyclic trimer of formaldehyde in the presence of a cationic polymerization catalyst.

The content of the oxyalkylene unit having at least 2 carbon atoms in Component A per 100 mol of an oxymethylene unit is 1.8 to 10 mol, preferably 2 to 10 mol. When the content of the oxyalkylene unit is less than 1 mol, a copolymer obtained is poor in thermal stability. When the above content exceeds 30 mol, the yield of a copolymer obtained is low.

The polymerization catalyst is selected from general cationic catalysts. The cationic catalyst includes Lewis acids, particularly, halides of boron, tin, titanium, phosphorus, arsenic and antimony such as boron trifluoride, tin tetrachloride, titanium tetrachloride, phosphorus pentachloride, phosphorus pentafluoride, arsenic pentafluoride and antimony pentafluoride, compounds such as complex compounds or salts thereof, protonic acids such as trifluoromethanesulfonic acid, perchloric acid, protonic acid ester, particularly, an ester of perchloric acid and a lower aliphatic alcohol, protonic acid anhydride, particularly, a mixture anhydride of perchloric acid and a lower aliphatic carboxylic acid, triethyloxonium hexafluorophosphate, triphenylmethyl hexafluoroalginate, acetylhexafluoroborate, heteropoly acid or an acidic salt thereof, and isopolyacid or an acidic salt thereof. A compound containing boron trifluoride, or a boron trifluoride hydrate or coordination complex compound is preferred. Boron trifluororide diethyl etherate and boron trifluororide dibutyl etherate that are coordination complexes with ethers are particularly preferred.

The amount of the above catalyst for use per mole of the oxymethylene unit is generally 2 x 10⁻⁸ to 4 x 10⁻⁴ mol, preferably 2 x 10⁻⁷ to 4 x 10⁻⁵ mol. When the amount of the catalyst is larger than the above amount range, a polyoxymethylene copolymer is poor in thermal stability. When the amount of the catalyst is smaller than the above amount range, the yield of a copolymer is low.

The polyoxymethylene copolymer can be produced by a method known per se. That is, it can be produced by means of a method and an apparatus that are used for producing a known polyoxymethylene copolymer from a trioxane as a main monomer. Namely, any one of a batch method and a continuous method can be employed. A bulk polymerization method and a polymerization method in the presence of an organic solvent such as cyclohexane can be employed. In a batch method, a reaction vessel with a stirrer can be used. In a continuous bulk polymerization method, there is preferably used a kneader, a twin-screw continuous extrusion kneader or a twin-axis paddle type continuous mixer, which has high stirring capability and accurate temperature control capability for coping with rapid solidification and heat generation during polymerization and further has a self-cleaning function for preventing adherence of scales.

In the polymerization, an acetal compound having a low molecular weight is generally used for adjusting the molecular weight of a polyoxymethylene copolymer. The acetal compound is selected from methylal, methoxymethylal, dimethoxymethylal, trimethoxymethylal, oxymethylene-di-n-butyl ether, or the like, while the acetal compound shall not be limited thereto. Generally, methylal is preferred. Generally, the above acetal compound is properly used as required depending upon an intended molecular weight.

A polyoxymethylene copolymer obtained by the above polymerization is subjected to a catalyst deactivation and removal treatment according to a known method using a deactivator such as a trivalent organic phosphorus compound, an amine compound or a hydroxide of an alkali metal or an alkaline earth metal or using such a deactivator in the form of an aqueous solution or an organic solution. The deactivator is selected from a trivalent organic phosphorus compound, an amine compound or a hydroxide of an alkali metal or an alkaline earth metal. The amine compound includes primary, secondary and tertiary aliphatic amines, aromatic amines, heterocyclic amines, hindered amines, and other known catalyst deactivators. Specific examples of the amine compound include ethylamine, diethylamine, triethylamine, mono-n-butylamine, di-n-butylamine, tri-n-butylamine, aniline, diphenylamine, pyridine, piperidine and morpholine. Of these, a trivalent organic phosphorus compound and a tertiary amine are preferred, and triphenylphosphine is the most preferred.

While the amount of the deactivator is not specially limited so long as the reaction is terminated by deactivation of the catalyst, the amount of the deactivator per mole of a polymerization catalyst used is generally 1 to 10 mol, preferably 2 to 5 mol.

A polyoxymethylene copolymer that has finished with the deactivation of the polymerization catalyst can be sent directly to a stabilization step that follows. When its further purification is required, it can be passed through washing, separation and recovery of an unreacted monomer and drying.

A polyoxymethylene copolymer that has been produced by methods as described above and has finished with the deactivation of the polymerization catalyst is mixed with an antioxidant, a stabilizer, a weathering agent, a lubricant, a colorant such as a dye or a pigment, a mold release agent, an antistatic agent, a flame retardant, a fluorescent brightener, a filler and other necessary additives. A mixture is melt-kneaded under heat with a single-screw or twin-screw extruder, a twin-axis paddle type continuous mixer, or the like, to thermally stabilize the polyoxymethylene copolymer. When the thermal stabilization treatment is carried out, water, an alcohol, an amine, etc., may be added. Further, the polyalkylene glycol (Component B) to be described later may be added to be melt kneaded together with the above additives.

The polyalkylene glycol (Component B), an antioxidant, the stabilizer, a weathering agent (light stabilizer), a lubricant, a colorant such as a dye or a pigment, a mold release agent, an antistatic agent, a flame retardant, a fluorescent brightener, a filler and other necessary additives may be partially or wholly added before or after the thermal stabilization treatment.

The method for mixing and incorporating the polyalkylene glycol (Component B), an antioxidant, the stabilizer, a weathering agent (light stabilizer), a lubricant, a colorant such as a dye or a pigment, a mold release agent, an antistatic agent, a flame retardant, a fluorescent brightener, a filler and other necessary additives with/into the polyoxymethylene copolymer that has finished with the deactivation of the polymerization catalyst is not critical, and any method can be employed so long as it is an industrially employable method. As required, there may be employed, for example, a method in which the above components are mixed with a blender such as a tumble mixer, a Henschel mixer, or the like, and the mixture is kneaded with a single-screw or twin-screw extruder, a twin-axis paddle type continuous mixer, a Banbury mixer, a mixing roll, or the like. Preferably, the above components are dried before they are kneaded.

The polyalkylene glycol (Component B) that is mixed with the polyoxymethylene copolymer (Component A) in the present invention includes homopolymers and copolymers of polyethylene glycol, polypropylene glycol, polybutylene glycol and polytetramethylene glycol, polyoxyethylene polyoxypropylene glyceryl ether and polyoxyethylene polyoxypropylene monobutyl ether. These may be used alone or in combination of two or more. Of these, polyethylene glycol is the most preferred. The number average molecular weight of the polyalkylene glycol is generally 10,000 to 1,000,000, preferably 12,000 to 500,000, more preferably 15,000 to 350,000. When the above number average molecular weight is smaller than the above range, there is not much improvement in folding durability. When it is larger than the above range, undesirably, the polyalkylene glycol comes to have poor miscibility with the polyoxymethylene copolymer.

In the present invention, the amount of the polyalkylene glycol (Component B) per 100 parts by weight of the polyoxymethylene copolymer (Component A) is 1 to 50 parts by weight, preferably 1.5 to 15 parts by weight, more preferably 2 to 10 parts by weight. When the amount of the polyalkylene glycol is smaller than the above range, there is small effect on the improvement of folding durability. When it is larger than the above range, undesirably, the tensile strength of a resin composition obtained comes to decrease to a great extent.

The polyoxymethylene resin composition of the present invention may further contain the following known various heat stabilizers, weathering agents (light stabilizer), lubricants, colorants such as dyes and pigments, mold release agents, antistatic agents, flame retardants, fluorescent brighteners and additives such as fillers, as required for imparting the polyoxymethylene resin composition with properties depending upon purposes.

In the polyoxymethylene resin composition of the present invention, a hindered phenol compound is preferably added as an antioxidant. While the hindered phenol compound is not specially limited, it is preferably selected from sterically hindered phenols such as 1,6-hexanediol-bis[3-(3,5-di-tert-butyl-4-hydroxyphenyl)propionate], triethylene glycol-bis-3-(3-tert-butyl-4-hydroxy-5-methylphenyl)propionate, pentaerythrityl-tetrakis-3-(3,5-di-tert-butyl-4-hydroxyphenyl)propionate, 2,2'-methylenebis(6-tert-butyl-4-methylpnenol), 3,9-bis{2-[3-(3-tert-butyl-4-hydroxy-5-methylphenyl)propionyloxy]-1,1-dimethylethyl)-2,4,8,10-tetraoxaspiro[5,5]undecane, N,N'-hexan-1,6-diylbis[3-(3,5-di-tert-butyl-4-hydroxyphenyl)propionamide] or 1,6-hexandiyl 3,5-bis(1,1-dimethylethyl)-4-hydroxybenzenepropionate ester. These hindered phenols may be used alone or in combination.

The amount of the hindered phenol compound per 100 parts by weight of the polyoxymethylene copolymer is preferably 0.01 to 5.0 parts by weight, more preferably 0.01 to 2.0 parts by weight.

In the polyoxymethylene resin composition of the present invention, a nitrogen-containing compound is preferably incorporated as a stabilizer. While the nitrogen-containing compound is not specially limited, it is preferably selected from melamine, methylolmelamine, guanamine, benzoguanamine, cyanoguanidine, N,N-diarylmelamine, a melamine-formaldehyde condensate, urea, a urea condensate synthesized by heating urea, polyacrylamine, polyethyleneimine, polyacrylamide, polyamide, a urethane compound or a pyridine compound. These compounds may be used alone or in combination of two or more. Melamine, methylolmelamine and a melamine-formaldehyde condensate are preferred.

The amount of the above nitrogen-containing compound as a stabilizer per 100 parts by weight of the polyoxymethylene copolymer is preferably 0.01 to 5.0 parts by weight, more preferably 0.01 to 1.0 part by weight.

In the polyoxymethylene resin composition of the present invention, further, a metal-containing compound selected from group of a hydroxide, an inorganic acid salt or an alkoxide of an alkali metal or alkaline earth metal is preferably incorporated as a stabilizer. A hydroxide, an inorganic acid salt or an alkoxide of sodium, potassium, calcium, magnesium or barium is more preferred. These compounds may be used alone or in combination of two or more. Of these, calcium hydroxide, magnesium hydroxide, potassium hydroxide, calcium carbonate or magnesium carbonate is the most preferred.

The amount of the above metal-containing compound as a stabilizer per 100 parts by weight of the polyoxymethylene copolymer is preferably 0.001 to 5.0 parts by weight, more preferably 0.001 to 1.0 part by weight.

In the polyoxymethylene resin composition of the present invention, preferably, a higher fatty acid amide having a long chain of at least 10 carbon atoms is incorporated as a mold release agent. While the higher fatty acid amide having a long chain of at least 10 carbon atoms is not specially limited, it is preferably selected from stearic acid amide, ethylenebisstearoamide, methylenebisstearoamide, methylenebislauroamide, palmitic acid amide or oleic acid amide. These amides may be used alone or in combination of two or more. Of these, ethylenebisstearoamide, methylenebisstearoamide and methylenebislauroamide are more preferred, and these may be used alone or in combination of two or more.

The amount of the higher fatty acid amide having a long chain of at least 10 carbon atoms per 100 parts by weight of the polyoxymethylene copolymer is preferably 0.01 to 5 parts by weight, more preferably 0.01 to 3 parts by weight.

In the polyoxymethylene resin composition of the present invention, a hindered amine compound, a benzophenone compound, a benzotriazole compound, an aromatic benzoate compound, a cyanoacrylate compound or an oxalic acid anilide compound may be incorporated as a weathering agent (light stabilizer). The amount of the weathering agent per 100 parts by weight of the polyoxymethylene copolymer is preferably 0.01 to 5 parts by weight, more preferably 0.01 to 3 parts by weight.

In the polyoxymethylene resin composition of the present invention, a metal salt of a higher fatty acid may be added as a lubricant and a heat stabilizer. While the metal salt of a higher fatty acid is not specially limited, it is preferably selected from a magnesium salt, a calcium salt or a barium salt of a higher fatty acid such as lauric acid, palmitic acid, stearic acid, behenic acid or 12-hydroxystearic acid. The amount of the metal salt of a higher fatty acid per 100 parts by weight of the polyoxymethylene copolymer is preferably 0.0001 to 5 parts by weight, more preferably 0.0001 to 3 parts by weight.

In the polyoxymethylene resin composition of the present invention, a paraffin wax or a fatty acid ester of a polyhydric alcohol may be added as a mold release agent and a slide agent. While the paraffin wax and the fatty acid ester of a polyhydric alcohol are not specially limited, the fatty acid ester of a polyhydric alcohol is preferably selected from a fatty acid ester of a polyhydric alcohol such as glycerin, diglycerin, pentaerythritol, sorbitan, ethylene glycol, diethylene glycol, trimethylolpropane or trimethylolethane and a fatty acid such as behenic acid, cerotic acid, montanic acid or lacceric acid. The paraffin wax is preferably a paraffin wax having a molecular weight of 1,000 to 2,000,000.

The amount of the paraffin wax or the fatty acid ester of a polyhydric alcohol per 100 parts by weight of the polyoxymethylene copolymer is preferably 0.01 to 5 parts by weight, more preferably 0.01 to 3 parts by weight.

In the polyoxymethylene resin composition of the present invention, preferably, a nucleating agent is added for improving moldability and decreasing the time period of a molding cycle. While the nucleating agent is not specially limited, it is preferably selected from boron nitride and a three-dimensionally crosslinked polyacetal. Boron nitride is particularly preferred.

The average particle diameter of boron nitride, as a value obtained by measurement according to a light transmission method, is preferably 100 µm or less, more preferably 50 µm or less, most preferably 20 µm or less.

The average particle diameter of a three-dimensional crosslinked polyacetal, as a value of standard mesh by ASTM, is preferably 3 mesh or less, more preferably 10 mesh or less, most preferably 20 mesh or less.

The amount of the nucleating agent per 100 parts by weight of the polyoxymethylene copolymer is preferably 0.0001 to 10.0 parts by weight, more preferably 0.001 to 5.0 parts by weight. When the amount of the nucleating agent is smaller than the above range, crystallization takes a longer time, which deteriorates productivity when a molded article is produced. When the above amount is larger than the above range, the folding durability is liable to be poor.

In the polyoxymethylene resin composition of the present invention, a coumarin fluorescent brightener or a benzoxazole fluorescent brightener may be added as a fluorescent brightener. While the coumarin fluorescent brightener and the benzoxazole fluorescent brightener are not specially limited, the fluorescent brightener is preferably selected from 3-(4'-acetylaminophenyl)-7-acetylaminocoumarin, 3-(4'-carboxyphenyl)-4-methyl-7-diethylaminocoumarin, or 2,5-bis(5'-tert-butylbenzoxazol-2'-yl)thiophene. The amount of the fluorescent brightener based on the polyoxymethylene copolymer is preferably 0.001 to 500 ppm, more preferably 0.01 to 100 ppm.

The polyoxymethylene resin composition of the present invention may contain a filler in such an amount that the folding durability featuring the present invention is not much impaired. The filler can be selected from glass beads, mica, kaolin, clay, asbestos, silicon dioxide, diatomite, graphite, molybdenum disulfide, carbon black, titanium oxide, glass fibers, milled fibers, potassium titanate fibers, boron fibers, carbon fibers, aramid fibers, or the like. The amount of the filler per 100 parts by weight of the polyoxymethylene copolymer is preferably 0.01 to 40 parts by weight, more preferably 0.1 to 20 parts by weight.

Although not specially limited, the melt flow index (MI) value (190°C, a load of 2,160 g) of the polyoxymethylene resin composition of the present invention is generally 0.5 to 100 g/10 minutes, preferably 1.0 to 70 g/10 minutes.

The polyoxymethylene resin composition according to the present invention is excellent in bending fatigue durability (folding durability) of a molded article, and in a folding durability test of which the measurement method will be described later, the number of times of folding is at least 10,000, at least 15,000 under a suitable condition, and at least 20,000 under a particularly excellent condition. The upper limit of the number of times of folding is approximately 150,000, preferably approximately 200,000.

The resin composition of the present invention therefore gives a molded article greatly improved in bending fatigue durability, so that it is remarkably excellently valuable as a material for molded articles that is required to have high folding durability.

The polyoxymethylene resin composition of the present invention has excellent bending fatigue durability, so that it is suitable for use in a hinge part. The "hinge part" refers to a molded article having a small-thickness portion (hinge portion) on which a bending or folding load is exerted at least once.

The form of the hinge part is not specially limited, and it can be a sheet-like, band-like or stripe-like form or any other form. The thickness and length of the hinge portion are not limited, either. Any molded article having a portion that substantially works as a hinge portion is included in the hinge part in the present invention.

In the present specification, the folding durability is defined to be durability against a bending or folding load that is exerted on the above hinge portion at least once.

The polyoxymethylene resin composition of the present invention contains the specific polyoxymethylene copolymer and the polyalkylene glycol. When subjected to injection-molding, gas-,assisted injection-molding, extrusion, blow molding or press molding, therefore, the polyoxymethylene resin composition can give a molded article rich with tenacity and excellent in folding durability and surface state while retaining mechanical properties inherent to polyoxymethylene as compared with any polyoxymethylene resin composition containing no polyalkylene glycol. The polyoxymethylene resin composition of the present invention can be suitably used for a molded article of claim 10 and 11.

Like a usual polyoxymethylene resin, when a curved surface which shows the form of an arc in a cross section is formed in a corner portion generally called R in the field of art of the above molded articles or when a flat surface or a curved surface which shows the form of a straight line in a cross section is formed in a corner portion generally called a C surface in the fieled of the above art, the length obtained by dividing the above arc or the above straight line by root 2 is not specially limited, and the above length can be determined, for example, to be 0 to 50 mm.

### Examples

Examples of the present invention and Comparative Examples will be described hereinafter, while the present invention shall not be limited thereto. Terms and measurement methods in Examples and Comparative Examples are shown below.
1) Measurement of nominal tensile strain at break
   Preparation of test piece: Pellets preliminarily dried at 90°C for 2 hours were molded into a test piece according to the method of ISO 294-1, and the test piece was conditioned and then subjected to a tensile test.
   Test of tensile properties: When the test piece was measured at a tensile test rate of 50 mm/minute according to the method of ISO 527-1 and 527-2, the test piece was measured for a nominal tensile strain at break.
2) Molar amount of oxyalkylene unit having at least 2 carbon atoms per 100 mol of oxymethylene unit in polymer: 10 Grams of a copolymer was placed in 100 ml of a 3N-HCl aqueous solution, and in a tightly closed container, the polymer was decomposed under heat at 120°C for 2 hours. After cooled, the aqueous solution was measured for amounts of alkylene glycol, dialkylene glycol and trialkylene glycol by gas chromatography (FID), and the amount of oxyalkylene units was expressed as a molar amount thereof per 100 mol of oxymethylene units.
3) Folding durability test (bending fatigue test)
   Measured according to JIS P8115. The detail of the measurement is as follows.
   Preparation of test piece: Pellets preliminarily dried at 90°C for 2 hours were charged into a molding machine with a hopper dryer (model: FS160S, clamping force 160 ton·f, supplied by Nissei Jushi Kogyo K.K.) and molded into test pieces under the following molding conditions. Concerning the form of the test pieces, each test piece had a thickness of 0.8 mm, a width of 12.7 mm and a length of 127 mm.

**Table 1**

| Molding conditions of test pieces | | | |
|---|---|---|---|
| Cylinder temperature nozzle side | Zone 1 | °C | 190 |
| | Zone 2 | °C | 200 |
| | Zone 3 | °C | 200 |
| | Zone 4 | °C | 180 |
| Number of revolution of screw | | rpm | 60 |
| Injection pressure | | kgf/cm² | 950 |
| Injection time period | | sec. | 15 |
| Cooling time period | | sec. | 15 |
| Mold temperature | | °C | 90 |
| Hopper dryer temperature | | °C | 80 |

### Measurement of folding durability

### a) Conditioning of test piece

A test piece obtained by molding was conditioned in a chamber having a temperature of 23 ±2°C and a relative humidity of 50 ±5 % for 48 hours or longer, and then the test piece was subjected to a bending durability test.

### b) Bending durability test

The repeat test of bending was carried out under the following conditions and the number of times of bending was counted until the test piece was ruptured.

The measurement was repeated five times, and an average value of five repeat tests was taken as a number of times of bending.

Testing conditions: Bending angle; ±135 degrees, tension load; 1 kgf, testing rate; 220 times/minute, R of chuck portion; 0.38 mm

Machine used; MIT method bending fatigue tester (manufactured by K.K. Toyo Seiki Seisakusho)

### Examples 1 - 13

100 Parts by weight of trioxane and 1,3-dioxolane having an amount shown in Table 2 were continuously polymerized while continuously adding 0.05 mmol, per mole of the total monomers, of a solution of boron trifluoride diethyl etherate in benzene as a catalyst, in a twin-screw kneader having a self-cleaning type paddle and having a jacket set at a temperature of 65°C, such that a residence time in the polymerizer came to be 20 minutes. As a molecular weight adjusting agent, a solution of methylal in benzene was continuously added in a methylal amount of 250 ppm based on the total monomers.

A solution of triphenyl phosphine in benzene was added to the thus-formed polymerizate in a triphenyl phosphine amount of 2 mol per mole of the boron trifluoride diethyl etherate, to deactivate the catalyst. Then, the polymerizate was pulverized to give a polyoxymethylene copolymer. The yield of the copolymer was at least 90 %.

To 100 parts by weight of the thus-obtained polyoxymethylene copolymer were added a polyethylene glycol shown in Table 2 in an amount shown in Table 2, 0.3 part by weight of triethylene glycol-bis-3-(3-tert-butyl-4-hydroxy-5-methylphenyl)propionate (trade name: Irganox 245, supplied by Ciba Geigy), 0.1 part by weight of melamine, 0.05 part by weigh of magnesium hydroxide, 0.15 part by weight of ethylenebisstearoamide and 0.005 part by weight of boron nitride having an average particle diameter of 4 µm (trade name; Denka Boron Nitride SP-2, supplied by Denki Kagaku Kogyo), and the mixture was preliminarily blended with a Henschel mixer. Then, the blend was fed to a vented twin-screw extruder and melt-kneaded at 200°C at a reduced pressure of 21.3 kPa to pelletize. The obtained pellets were used for the measurement of tensile properties and folding durabilities. Table 2 also shows the results.

### Comparative Example 1

Polymerization was carried out in the same manner as in Example 3. Then, the catalyst was deactivated, and then the polymerizate was pulverized to give a polyoxymethylene copolymer. The yield of the copolymer was more than 90 %.

Then, pellets were obtained in the same manner as in Example 3 except that no polyethylene glycol was added. The obtained pellets were used for the measurement of tensile properties and folding durabilities. Table 2 shows the results.

### Comparative Example 2

Polymerization was carried out in the same manner as in Example 1 except that the amount of 1,3-dioxolane was changed as shown in Table 2. A polyethylene glycol and other additives were incorporated to 100 parts by weight of the polyoxymethylene copolymer, and pellets were prepared, in the same manner as in Example 1. The obtained pellets were used for the measurement of tensile properties and folding durabilities. Table 2 shows the results.

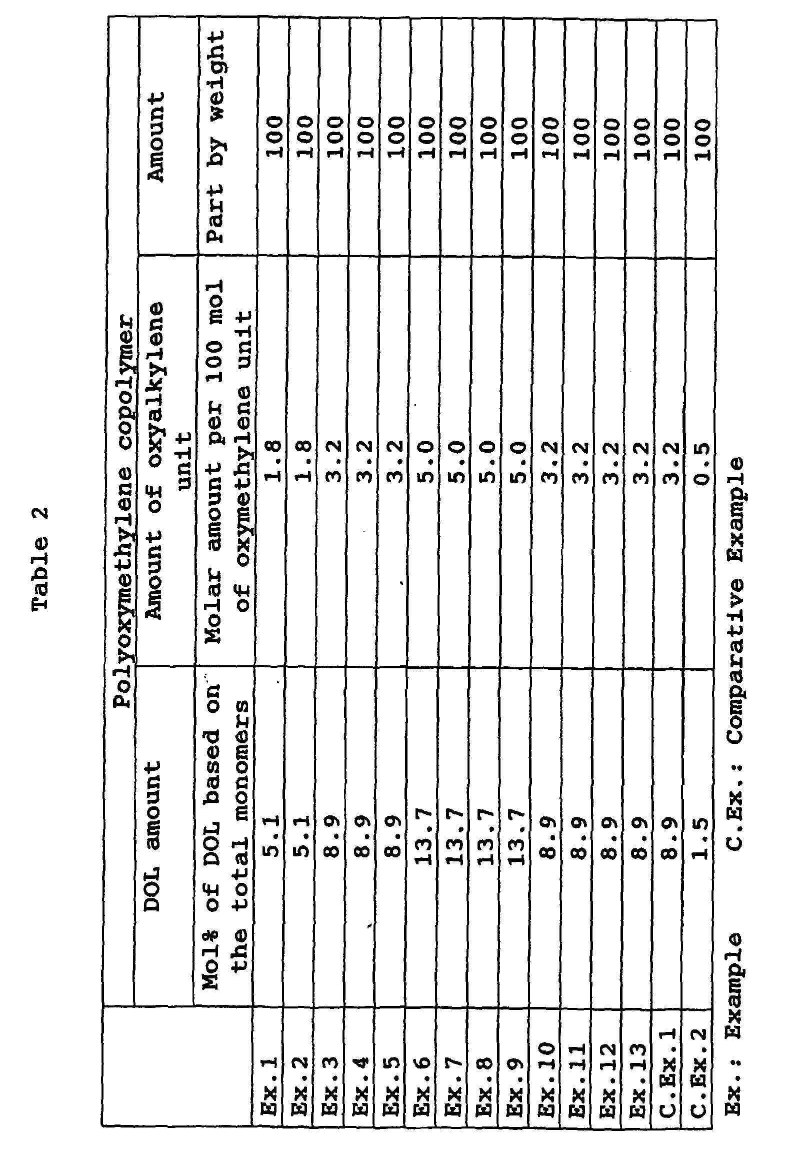

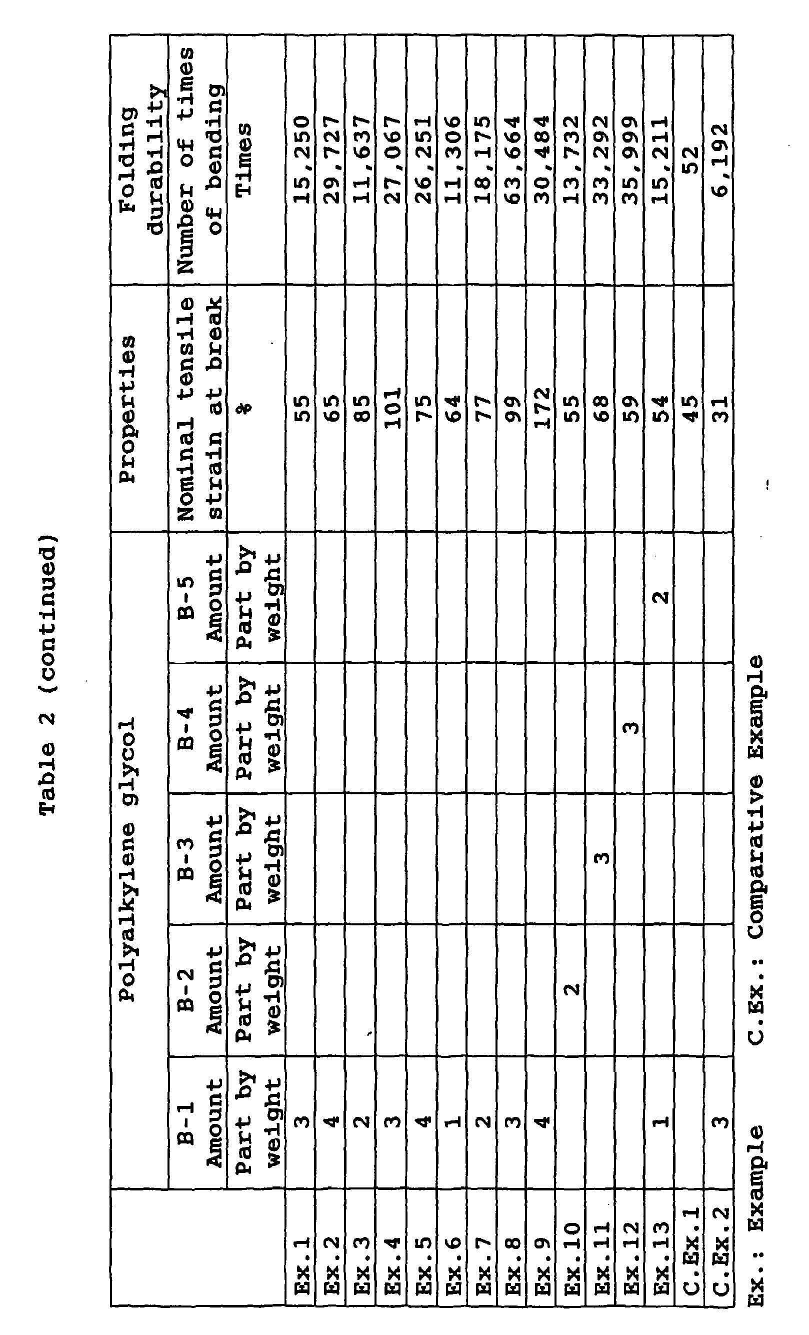

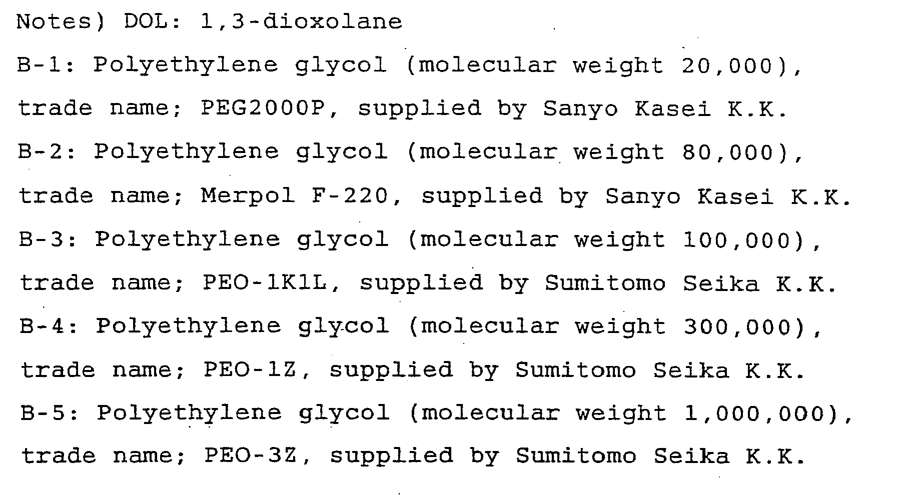

### Effect of the Invention

The polyoxymethylene resin composition of the present invention has high tenacity and high flexibility, is excellent in folding durability and is excellent in compatibility and dispersibility, and it has a characteristic feature that a molded article formed of the same has an excellent surface condition, so that it can give a molded article suitable for use requiring hinge properties.

## Claims

1. A polyoxymethylene resin composition comprising
(A) 100 parts by weight of a polyoxymethylene copolymer containing an oxymethylene unit as a main recurring unit and 1.8 to 10 mol, per 100 mol of the oxymethylene unit, of an oxyalkylene unit having at least 2 carbon atoms as a unit from a comonomer, as Component A, with the proviso that 3.6 mol and 7.7 mol, per 100 mol of the oxymethylene unit, of the oxyalkylene unit are excluded, and
(B) 1 to 50 parts by weight of a polyalkylene glycol as Component B.

2. The polyoxymethylene resin composition of claim 1, wherein Component A is a polyoxymethylene copolymer containing an oxyalkylene unit having 2 to 6 carbon atoms as a unit from a comonomer.

3. The polyoxymethylene resin composition of claim 1, wherein Component A is a polyoxymethylene copolymer containing an oxyethylene unit as a unit from a comonomer.

4. The polyoxymethylene resin composition of claim 1, wherein Component A is a polyoxymethylene copolymer that is a polymerisation product from trioxane and 1,3-dioxolane as monomers.

5. The polyoxymethylene resin composition of claim 1, wherein Component B is polyethylene glycol.

6. The polyoxymethylene resin composition of claim 1, wherein Component B is polyethylene glycol having a molecular weight of 10,000 to 1,000,000.

7. The polyoxymethylene resin composition of claim 1, which contains 1.5 to 20 parts by weight of Component B per 100 parts by weight of Component A.

8. The polyoxymethylene resin composition of claim 1, which further contains 0.0001 to 10 parts by weight, per 100 parts by weight of Component A, (C) a nucleating agent as Component C.

9. The polyoxymethylene resin composition of claim 1, which gives at least 10,000 times as a number of times of bending in a folding durability test of a molded article formed of the polyoxymethylene resin composition.

10. A molded article formed of the polyoxymethylene resin composition of claim 9.

11. A molded hinge part article formed of a polyoxymethylene resin composition comprising
(A) 100 parts by weight of a polyoxymethylene copolymer containing an oxymethylene unit as a main recurring unit and 1.8 to 10 mol, per 100 mol of the oxymethylene unit, of an oxyalkylene unit having at least 2 carbon atoms as a unit from a comonomer, as Component A, and
(B) 1 to 50 parts by weight of a polyalkylene glycol as Component B.

## Patentansprüche

1. Polyoxymethylenharzzusammensetzung, umfassend
(A) 100 Gewichtsteile eines Polyoxymethylencopolymers, das eine Oxymethyleneinheit als eine Hauptwiederholungseinheit und 1,8 bis 10 mol, pro 100 mol der Oxymethyleneinheit, einer Oxyalkyleneinheit mit mindestens 2 Kohlenstoffatomen als eine Einheit aus einem Comonomer enthält, als Komponente A unter der Maßgabe, dass 3,6 mol und 7,7 mol, pro 100 mol der Oxymethyleneinheit, der Oxyalkyleneinheit ausgeschlossen sind, und
(B) 1 bis 50 Gewichtsteile eines Polyalkylenglycols als Komponente B.

2. Polyoxymethylenharzzusammensetzung nach Anspruch 1, wobei Komponente A ein Polyoxymethylencopolymer ist, das eine Oxyalkyleneinheit mit 2 bis 6 Kohlenstoffatomen als eine Einheit aus einem Comonomer enthält.

3. Polyoxymethylenharzzusammensetzung nach Anspruch 1, wobei Komponente A ein Polyoxymethylencopolymer ist, das eine Oxyethyleneinheit als eine Einheit aus einem Comonomer enthält.

4. Polyoxymethylenharzzusammensetzung nach Anspruch 1, wobei Komponente A ein Polyoxymethylencopolymer ist, das ein Polymerisationsprodukt aus Trioxan und 1,3-Dioxolan als Monomeren ist.

5. Polyoxymethylenharzzusammensetzung nach Anspruch 1, wobei Komponente B Polyethylenglycol ist.

6. Polyoxymethylenharzzusammensetzung nach Anspruch 1, wobei Komponente B Polyethylenglycol mit einem Molekulargewicht von 10.000 bis 1.000.000 ist.

7. Polyoxymethylenharzzusammensetzung nach Anspruch 1, die 1,5 bis 20 Gewichtsteile Komponente B pro 100 Gewichtsteile Komponente A enthält.

8. Polyoxymethylenharzzusammensetzung nach Anspruch 1, die des Weiteren 0,0001 bis 10 Gewichtsteile, pro 100 Gewichtsteile Komponente A, (C) eines Nukleierungsmittels als Komponente C enthält.

9. Polyoxymethylenharzzusammensetzung nach Anspruch 1, die mindestens 10.000 Wiederholungen als eine Anzahl von Wiederholungen des Biegens in einem Faltbeständigkeitstest eines Formartikels ergibt, der aus der Polyoxymethylenharzzusammensetzung gebildet worden ist.

10. Formartikel, der aus der Polyoxymethylenharzzusammensetzung nach Anspruch 9 gebildet ist.

11. Gelenkteil-Formartikel, der aus einer Polyoxymethylenharzzusammensetzung gebildet worden ist, umfassend:
(A) 100 Gewichtsteile eines Polyoxymethylencopolymers, das eine Oxymethyleneinheit als eine Hauptwiederholungseinheit und 1,8 bis 10 mol, pro 100 mol der Oxymethyleneinheit, einer Oxyalkyleneinheit mit mindestens 2 Kohlenstoffatomen als eine Einheit aus einem Comonomer enthält, als Komponente A und
(B) 1 bis 50 Gewichtsteile eines Polyalkylenglycols als Komponente B.

## Revendications

1. Composition de résine polyoxyméthylène comprenant :
(A) 100 parties en poids d'un copolymère polyoxyméthylène contenant un motif oxyméthylène en tant que motif récurrent principal et 1,8 à 10 moles, pour 100 moles du motif oxyméthylène, d'un motif oxyalkylène comprenant au moins 2 atomes de carbone en tant que motif issu d'un comonomère, en tant que composant A, à condition que 3,6 moles et 7,7 moles, pour 100 moles du motif oxyméthylène, du motif oxyalkylène soient exclus, et
(B) 1 à 50 parties en poids d'un polyalkylèneglycol en tant que composant B.

2. Composition de résine polyoxyméthylène selon la revendication 1, dans laquelle le composant A est un copolymère polyoxyméthylène contenant un motif oxyalkylène comprenant 2 à 6 atomes de carbone en tant que motif issu d'un comonomère.

3. Composition de résine polyoxyméthylène selon la revendication 1, dans laquelle le composant A est un copolymère polyoxyméthylène contenant un motif oxyéthylène en tant que motif issu d'un comonomère.

4. Composition de résine polyoxyméthylène selon la revendication 1, dans laquelle le composant A est un copolymère polyoxyméthylène qui est un produit de polymérisation de trioxane et de 1,3-dioxolane en tant que monomères.

5. Composition de résine polyoxyméthylène selon la revendication 1, dans laquelle le composant B est un polyéthylèneglycol.

6. Composition de résine polyoxyméthylène selon la revendication 1, dans laquelle le composant B est un polyéthylèneglycol ayant une masse moléculaire de 10 000 à 1 000 000.

7. Composition de résine polyoxyméthylène selon la revendication 1, qui contient 1,5 à 20 parties en poids de composant B pour 100 parties en poids de composant A.

8. Composition de résine polyoxyméthylène selon la revendication 1, qui contient en outre 0,0001 à 10 parties en poids, pour 100 parties en poids de composant A, (C) d'un agent de nucléation en tant que composant C.

9. Composition de résine polyoxyméthylène selon la revendication 1, qui donne au moins 10 000 fois en tant que nombre de pliages lors d'un essai de durabilité par pliage d'un article moulé formé de la composition de résine polyoxyméthylène.

10. Article moulé formé de la composition de résine polyoxyméthylène selon la revendication 9.

11. Article de pièce de charnière moulé formé d'une composition de résine polyoxyméthylène comprenant :
(A) 100 parties en poids d'un copolymère polyoxyméthylène contenant un motif oxyméthylène en tant que motif récurrent principal et 1,8 à 10 moles, pour 100 moles du motif oxyméthylène, d'un motif oxyalkylène comprenant au moins 2 atomes de carbone en tant que motif issu d'un comonomère, en tant que composant A, et
(B) 1 à 50 parties en poids d'un polyalkylèneglycol en tant que composant B.
